(19) Europäisches Patentamt
European Patent Office
Office européen des brevets

(11) **EP 3 337 680 B1**

(12) **EUROPÄISCHE PATENTSCHRIFT**

(45) Veröffentlichungstag und Bekanntmachung des Hinweises auf die Patenterteilung:
**30.10.2019   Patentblatt 2019/44**

(21) Anmeldenummer: **16715554.8**

(22) Anmeldetag: **12.04.2016**

(51) Int Cl.:
**B60C 19/00** (2006.01)        **B29D 30/00** (2006.01)

(86) Internationale Anmeldenummer:
**PCT/EP2016/057961**

(87) Internationale Veröffentlichungsnummer:
**WO 2017/028962 (23.02.2017 Gazette 2017/08)**

(54) **FAHRZEUGLUFTREIFEN**

TYRE

PNEUMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2015   DE 102015215738**

(43) Veröffentlichungstag der Anmeldung:
**27.06.2018   Patentblatt 2018/26**

(73) Patentinhaber: **Continental Reifen Deutschland GmbH**
**30165 Hannover (DE)**

(72) Erfinder:
• **SCHÜRMANN, Oliver**
**30855 Langenhagen (DE)**
• **TYBURSKI, Andreas**
**31241 Ilsede (DE)**
• **GOMES, Eduarda**
**4780-409 Santo Tirso (PT)**
• **GARGULAK, Tomas**
**76315 Slusovice (CZ)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
DE-A1-102007 028 932     DE-A1-102011 053 686
JP-A- 2005 104 314

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 337 680 B1

**Beschreibung**

Die Erfindung betrifft einen Fahrzeugluftreifen nach dem Oberbegriff des Patentanspruches 1.

Ein Fahrzeugluftreifen der hier betroffenen Art kann sowohl für Zweiräder, als auch für Personenkraftwagen, landwirtschaftliche Fahrzeuge und/oder Lastkraftwagen zum Einsatz kommen, deren Fahrzeugräder mit Fahrzeugluftreifen ausgestattet sind, wobei die Fahrzeugluftreifen eine strukturierte Lauffläche aufweisen, deren Profil in geeigneter Weise an die zu erwartenden Untergründe und Witterungsverhältnisse angepasst ist. Die Lauffläche des Fahrzeugluftreifens geht in an sich bekannter Weise beidseitig in Seitenwände über, deren Ende jeweils durch einen Reifenwulst gebildet wird. Der Reifenwulst dient der luftdichten Fixierung des aus verschiedenen Gummimischungen zusammengesetzten Teils des Fahrzeugluftreifens mit einer Felge des mit dem Fahrzeugluftreifen auszustattenden Fahrzeugrades. Die Felge weist in ebenfalls bekannter Weise korrespondierend zu dem Reifenwulst einen Felgenrand auf, an den sich der Reifenwulst dichtend anlegt, wenn der durch den schlauchlosen Fahrzeugluftreifen und die Felge umschlossene Lufthohlraum mit Druckluft befüllt wird.

Moderne Fahrzeugluftreifen müssen heutzutage nicht nur die vom Kraftfahrzeug erzeugte Bewegungsenergie bei wechselnden Umweltbedingungen jederzeit optimal auf den Untergrund übertragen, sondern auch zunehmend gehobenen Komfortansprüchen entsprechen. Hierbei spielt auch das Abrollgeräusch des Fahrzeugluftreifens eine maßgebliche Rolle, das durch die Vibration der Luft entsteht, wenn diese beim Anpressen des Fahrzeugluftreifens gegen den Straßenbelag komprimiert wird. Das auf diese Weise entstehende Abrollgeräusch wird vom Fahrzeugluftreifen auf die Radnabe übertragen, sodass es letztlich über die Lenkung und die Radaufhängung in den Fahrgastraum gelangt. Eine akustische Belastung durch das während des Fahrens entstehende Abrollgeräusch wird jedoch nicht nur innerhalb, sondern auch außerhalb des Kraftfahrzeugs als störend empfunden, was beispielsweise in Städten eine zunehmende Bedeutung gewinnt.

Das Abrollgeräusch kann durch eine bereits bekannte und in einigen Kraftfahrzeugen im Einsatz befindliche Technologie maßgeblich reduziert werden. Dabei kommt als schallabsorbierendes Mittel ein in dem Fahrzeugluftreifen angeordneter und häufig als Schaumstoffkörper ausgeführter Absorber zum Einsatz, der stoffschlüssig, also beispielsweise mit einem Kleber, an der Innenseite der Lauffläche des Fahrzeugluftreifens angebracht wird. Bekannt sind auch Lösungen, bei denen der Absorber an der Felge des Fahrzeugrades befestigt ist. Die Struktur dieses Absorbers, der in der Regel aus Polyurethan besteht, bleibt auch bei extremen Temperaturschwankungen erhalten. Polyurethane sind Kunststoffe oder Kunstharze, die aus der Polyadditionsreaktion von Dialkoholen beziehungsweise Polyolen mit Polyisocyanaten entstehen. In Abhängigkeit von der Art des Kraftfahrzeugs, dessen Geschwindigkeit und der Straßenoberfläche, können durch die zuvor genannten Maßnahmen Reduzierungen der Fahrzeuggeräusche im Innenraum des Kraftfahrzeugs um bis zu 9 dB(A) erreicht werden, wobei durch die Einbringung des Absorbers in den Fahrzeugluftreifen weder die Fahreigenschaften noch die Laufleistung, die Tragfähigkeit oder die mit dem Fahrzeugluftreifen erzielbare Geschwindigkeit eingeschränkt wird.

Ein derartiger Fahrzeugluftreifen eines Fahrzeugrades geht beispielhaft aus der DE 10 2007 028 932 A1 hervor. In der Druckschrift wird beschrieben, dass der als Schaumstoffkörper ausgeführte Absorber innerhalb des Fahrzeugluftreifens mit einem vorab aufgebrachten, selbsttätig abdichtenden Dichtmittel haftend an der Innenoberfläche des Fahrzeugluftreifens befestigt wird. Als vollflächig verklebtes Dichtmittel kommt hierbei ein Polyurethan-Gel zum Einsatz.

Darüber hinaus ist aus der DE 198 06 953 C2 ein für ein Fahrzeugrad geeigneter Fahrzeugluftreifen sowie ein Verfahren zur Herstellung eines derartigen Fahrzeugluftreifens bekannt, bei dem der ebenfalls als Schaumstoffkörper ausgeführte Absorber bereits vor dem Aufbringen auf der inneren Oberfläche des Fahrzeugluftreifens in einer hierfür geeigneten Form durch ein Aufschäumverfahren hergestellt und anschließend auf der dem Innenraum des Fahrzeugluftreifens zugewandten Seite mit einer zusätzlichen, schallabsorbierenden Struktur ausgestattet wird. Die auf die Schaumstoffschicht aufgebrachte Struktur kann dabei eine Linienform oder eine Wellenform aufweisen, die jeweils dazu geeignet sind, eine vergrößerte Oberfläche zu schaffen, die zusätzlich schallabsorbierend wirkt.

DE 10 2011 053 686 A1 betrifft einen Fahrzeugluftreifen, bei dem entweder die gesamte Innenoberfläche des Fahrzeugluftreifens mit einem Haftvermittler (Kleber) versehen wird oder lediglich in der Druckschrift beschriebene Grundflächen von auf der Oberfläche eines Absorbers angeordneten Federn mit dem Haftvermittler benetzt, um anschließend die daraus bestehende, massebildende Schicht mit der Seite der Grundflächen an der Innenoberfläche des Fahrzeugluftreifens zu fixieren. Eine ähnliche Lösung geht aus der JP 2005-104314 A hervor, wobei hier das Hauptaugenmerk auf eine verbesserte Wärmeableitung gelegt wird.

Von Bedeutung ist, dass bisher stets eine vollflächige Verklebung zwischen Absorber und Innenseite des Fahrzeugluftreifens erfolgt, weil allgemein die Auffassung vertreten wird, dass nur eine vollflächige Verklebung hinreichende Sicherheit gegen ein unerwünschtes, selbsttätiges Ablösen des Absorbers von der Innenoberfläche des Fahrzeugluftreifens gewährleisten könne. Außerdem wurde es als fertigungstechnisch einfachste Lösung betrachtet, die gesamte Innenoberfläche des Fahrzeugluftreifens mit einem Haftvermittler oder Haftmittel zu versehen und anschließend den Absorber an dem hierfür vorgesehenen Abschnitt der Innenoberfläche zu fixieren. Nunmehr konnte jedoch festgestellt werden, dass die vollflächige Verklebung Nachteile hinsichtlich des Gewichts des Fahrzeugluftreifens und damit eine Beeinflussung der Fahreigenschaften eines mit dem Fahrzeugluftreifen ausgestatteten Fahrzeugrades mit sich bringt, auch wenn diese vergleichsweise gering ist. Darüber hinaus ist der Aufwand für die Vorbereitung der Verklebung und hierbei insbesondere der Reinigungsaufwand zur Befreiung der zu verklebenden Oberflächen von Verunreinigungen relativ hoch, so dass hier eine Reduzierung wünschenswert wäre. Letztlich wird bei der vollflächigen Verklebung auch eine erhebliche Menge Haftmittel benötigt, was wirtschaftlich nachteilig ist.

Der Erfindung liegt die Aufgabe zugrunde, einen Fahrzeugluftreifen mit einem zur Schallabsorption geeigneten Absorber bereitzustellen, bei dem die Verklebung zwischen Absorber und Fahrzeugluftreifen optimiert und möglichst Gewicht sparend erfolgt und die fertigungstechnisch einfach umsetzbar ist.

Die Erfindung löst diese Aufgabenstellung mit den Merkmalen des Patentanspruches 1. Weitere Ausgestaltungen der Erfindung sind Gegenstand der sich anschließenden Unteransprüche.

Ein Fahrzeugluftreifen, dessen profilierte Lauffläche beidseitig in Seitenwände übergeht, deren Ende durch einen Reifenwulst gebildet wird, der luftdicht in eine Felge eines Fahrzeugrades einsetzbar ist, wobei zur Schallabsorption in den Fahrzeugluftreifen ein Absorber integriert ist, wurde erfindungsgemäß dahingehend weitergebildet, dass die stoffschlüssige Verbindung aus einem nicht vollflächig zwischen dem Absorber und der Innenoberfläche des Fahrzeugluftreifens verteilt angeordneten Haftmittel besteht, das eine sich entlang des Umfanges der Innenoberfläche des Fahrzeugluftreifens ungleichmäßige, sich ändernde Verteilung aufweist.

Durch die erfindungsgemäße Lösung, eine nicht vollflächige Verklebung zwischen dem Absorber und der Innenoberfläche des Fahrzeugluftreifens vorzusehen, werden gleich mehrere Vorteile erreicht. So stellt einerseits die Einsparung kostenintensiven Haftmittels einen wirtschaftlichen Vorzug dar, der darüber hinaus auch zur Reduzierung des Gesamtgewichtes des Fahrzeugluftreifens und damit des mit dem Fahrzeugluftreifen ausgestatteten Fahrzeugrades führt, was sich letztlich auch auf den Kraftstoffverbrauch des Kraftfahrzeugs insgesamt positiv auswirkt. Darüber hinaus ergeben sich zudem fertigungstechnische Vorteile, weil sowohl die Vorbereitung der zu verbindenden Oberflächen, als auch der Klebevorgang als solcher sich wesentlich vereinfachen, so dass derartig ausgestattete Fahrzeugluftreifen in kürzerer Zeit hergestellt und damit wirtschaftlicher erzeugt werden können. Ein Merkmal der Erfindung besteht auch darin, dass das Haftmittel eine sich entlang des Umfanges der Innenoberfläche des Fahrzeugluftreifens ungleichmäßige, sich ändernde Verteilung aufweist. Bei dieser Art der Aufbringung des Haftmittels wird kein bestimmtes Muster oder keine bestimmte Reihenfolge der Aufbringung des Haftmittels auf die Innenoberfläche des Fahrzeugluftreifens und/oder auf die Haftmittelfläche des Absorbers vorgesehen. Das Haftmittel kann hierbei folglich wahllos aufgetragen werden oder, was einer bevorzugten Ausführungsvariante entspricht, es wird eine definierte Reihenfolge der Auftragung des Haftmittels vorgesehen, jedoch ändert sich das Bild des Haftmittelauftrags entlang der Innenoberfläche des Fahrzeugluftreifens beziehungsweise entlang der Oberfläche des Absorbers.

So kann entsprechend einer ersten Ausgestaltung dieses Erfindungsgedankens das Haftmittel aus einem Streifenmuster bestehen, eine Wellenlinienform aufweisen oder eine Punktmatrix bilden. Die nachfolgenden Beispiele der Auftragung des Haftmittels beziehen sich entweder auf die Umfangsrichtung des Fahrzeugluftreifens oder die Richtung quer zum Umfang des Fahrzeugluftreifens.

Maßgeblich für die Auswahl der Kontur der Haftmittelführung ist erfindungsgemäß, dass das aufgebrachte Haftmittel Lücken aufweist und zwar derart, dass der Absorber und der Fahrzeugluftreifen zuverlässig und dauerhaft fest miteinander verbunden werden und gleichzeitig ein Maximum an Haftmittel eingespart wird.

Die Wellenlinienform der Haftmittelführung kann sich dabei über die gesamte Breite des Absorbers, also quer zur Umfangsrichtung des Fahrzeugluftreifens, oder zumindest über einen wesentlichen Teil der Breite des Absorbers erstrecken.

Betrachtet man beispielsweise die Wellenlinienform, so kann diese, in Umfangsrichtung des Fahrzeugluftreifens betrachtet, aus einer gleichmäßigen, also annähernd sinusförmigen Welle der Haftmittelführung bestehen.

Eine andere Variante dieser Wellenlinienform ist darin zu sehen, dass die einzelnen einander abwechselnden Wellenberge und Wellentäler der Haftmittelführung zunehmende beziehungsweise abnehmende Abstände zueinander aufweisen.

Die Punktmatrix ist im erfindungsgemäßen Sinne so zu verstehen, dass das Haftmittel punktuell über die Innenoberfläche des Fahrzeugluftreifens beziehungsweise über die Oberfläche des Absorbers verteilt wird. Einfacher gesagt wird der Haftmittel auf wenigstens eine der Kontaktflächen aufgetupft.

Hinsichtlich des Streifenmusters ergeben sich zahlreiche, unterschiedliche Ausführungsvarianten der Auftragung des Haftmittels auf die Innenoberfläche des Fahrzeugluftreifens oder auf die korrespondierende Haftmittelfläche des Absorbers. So kann hierunter beispielsweise ein Streifenmuster verstanden werden, dessen Streifen jeweils gleiche oder ungleiche Abstände beziehungsweise gleiche oder ungleiche Abmessungen aufweisen. Darüber hinaus kann das Streifenmuster auch eine Gitterstruktur ausbilden, so dass sich verschiedene Streifen auf der mit Haftmittel auszustattenden Oberfläche kreuzen.

Eine weitere Variante besteht darin, dass in Umfangsrichtung des Fahrzeugluftreifens aufeinanderfolgende Haftmittelstreifen unterschiedliche Breiten aufweisen oder die Abstände zwischen den Haftmittelstreifen unterschiedlich breit sind. Weiterhin ist unter dem erwähnten Streifenmuster auch eine Ausführung zu verstehen, bei dem jeweils zwei aufeinander folgende Haftmittelstreifen senkrecht zur Umfangsrichtung des Fahrzeugluftreifens betrachtet einen Versatz zueinander aufweisen. Diese und zahlreiche weitere Möglichkeiten der Anordnung des Haftmittels sind von dem Erfindungsgedanken umfasst und können wegen der Vielfältigkeit an dieser Stelle nicht allumfänglich erwähnt werden.

Neben den zuvor genannten, sehr unterschiedlichen Geometrien, die der Haftmittelauftrag aufweisen kann, ist es erfindungsgemäß auch möglich, das Volumen des Haftmittels entlang des Umfangs der Innenoberfläche oder in Richtung quer zum Umfang der Innenoberfläche des Fahrzeugluftreifens mit einer gleichmäßigen oder sich ändernden Verteilung vorzusehen, sodass das Haftmittel auch Bereiche mit Verdickungen aufweisen kann. Hierbei wird entweder die Geometrie der Haftmittelstreifen verändert oder ihr Volumen. Einfacher gesagt werden an der Innenoberfläche des Fahrzeugluftreifens beziehungsweise der korrespondierenden Oberfläche des Absorbers Abschnitte mit einem verstärkten Haftmittelauftrag und Abschnitte mit einem reduzierten Haftmittelauftrag vorgesehen. Die Abschnitte mit einem verstärkten Haftmittelauftrag liegen dabei bevorzugt in den Bereichen der zu erwartenden maximalen Belastung der miteinander kontaktierenden Oberflächen.

Erfindungsgemäß ist ferner vorgesehen, dass die Gesamthaftmittelfläche zwischen der Innenoberfläche des Fahrzeugluftreifens und dem Absorber zwischen 10% und 90% der projezierten Fläche des Absorbers beträgt. Um dies zu verdeutlichen ist hierzu anzumerken, dass beispielsweise bei einer Gesamthaftmittelfläche von 80 % zwischen der Innenoberfläche des Fahrzeugluftreifens und dem Absorber demnach 20 % der projezierten Fläche des Absorbers frei bleiben, also nicht mit einem Haftmittel versehen sind. Mit diesen Werten konnten bereits sehr gute Ergebnisse erzielt werden.

Eine bevorzugte Ausführungsvariante besteht dem gegenüber jedoch darin, dass die Gesamthaftmittelfläche zwischen der Innenoberfläche des Fahrzeugluftreifens und dem Absorber zwischen 30% und 70% der projezierten Fläche des Absorbers beträgt.

Entsprechend einer sehr speziellen, eingrenzenden Lösung ist sogar vorgesehen, dass die Gesamthaftmittelfläche zwischen der Innenoberfläche des Fahrzeugluftreifens und dem Absorber zwischen 40% und 50% der projezierten Fläche des Absorbers beträgt. Anders ausgedrückt wird gemäß diesem Vorschlag etwa nur die Hälfte der Gesamthaftmittelfläche mit einem Haftmittel versehen. Die verbleibende Hälfte ist und bleibt haftmittelfrei. Mit dieser Vorgehensweise ist bisher das beste Ergebnis erzielt worden.

Das Haftmittel wird vor der Verbindung mit dem Absorber entweder auf die Haftmittelfläche des Absorbers oder auf die Innenoberfläche des Fahrzeugluftreifens aufgetragen. Bei einem Auftrag des Haftmittels auf die Innenoberfläche des Fahrzeugluftreifens wird bislang überwiegend ein Auftrag angestrebt, der exakt der Haftmittelfläche des Absorbers entspricht. Dies erfordert eine hohe Fertigungsgenauigkeit und ist folglich relativ aufwändig. Nunmehr konnte festgestellt werden, dass es eine wesentliche Vereinfachung der Herstellung eines Fahrzeugluftreifens darstellt, wenn der Haftmittelauftrag auf der Innenoberfläche des Fahrzeugluftreifens erfolgt und das Haftmittel nicht nur innerhalb der projezierten Fläche des Absorbers, sondern bedenkenlos auch darüber hinaus appliziert wird.

Als ein besonders geeignetes Haftmittel hat sich Polyurethan-Gel erwiesen, das für die Umsetzung der Erfindung bevorzugt eingesetzt wird.

Eine sehr spezifische Besonderheit eines erfindungsgemäßen Fahrzeugluftreifens ist darin zu sehen, dass das Verhältnis f(x) von Haftmittelfläche zu projezierter Fläche auf jeder Teilfläche X * Y folgender Funktion folgt:

$$f(x) = \frac{1}{2} \sum_{n=0}^{m} \left( a_n \frac{x^n}{U^n} + \frac{b_n}{2}\left(1 + \sin\frac{u_n x}{U}\right) + c_n e^{-v_n \frac{x}{U}} \right) \Bigg/ \sum_{n=0}^{m} (a_n + b_n + c_n) +$$

$$+ \frac{1}{2} \sum_{n=0}^{m} \left( g_n \frac{y^n}{B^n} + \frac{h_n}{2}\left(1 + \sin\frac{j_n y}{B}\right) + i_n e^{-k_n \frac{Y}{B}} \right) \Bigg/ \sum_{n=0}^{m} (g_n + h_n + i_n)$$

und X und Y Koordinaten in umfangs- beziehungsweise Querrichtung des Fahrzeugluftreifens (1) darstellen und folgendes gilt:

$$0 \leq X \leq U$$

$$0 <= Y <= B$$

$$0 <= x <= U$$

$$0 <= y <= B$$

$$Vn > 0.$$

Dabei stellen "$a_n$", "$b_n$", "$c_n$" und "$u_n$" frei wählbare Parameter dar. Das Haftmittel kann ferner eine beliebige Kombination aus einem oder mehreren der zuvor genannten Varianten darstellen.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:

Figur 1: ein vollständig montiertes Fahrzeugrad im Querschnitt und
Figuren 2-18: verschiedene Darstellungen von Möglichkeiten des Haftmittelauftrages.

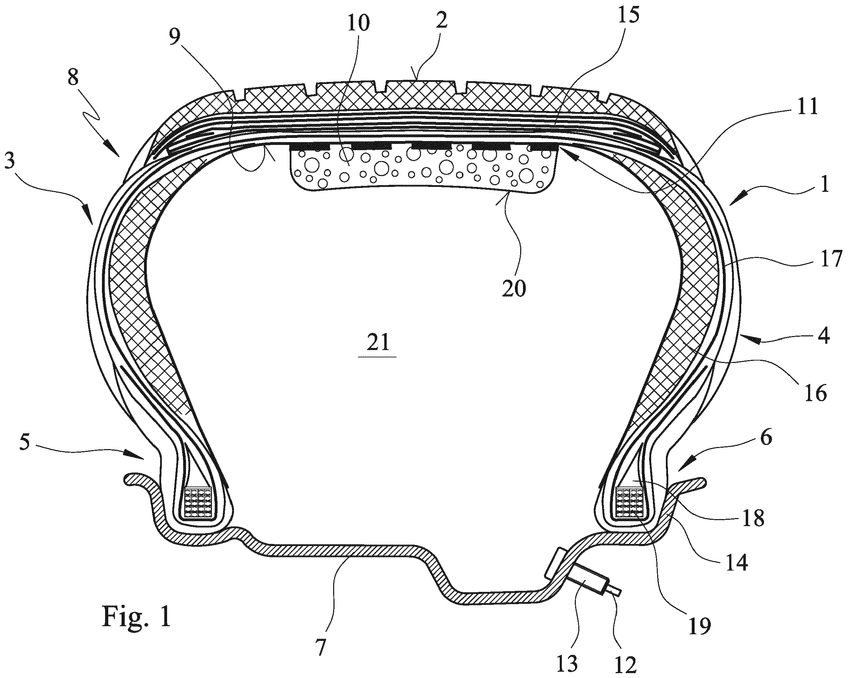

In der Figur 1 ist beispielhaft ein vollständig montiertes Fahrzeugrad 8 im Querschnitt dargestellt. Dieses setzt sich aus einem Fahrzeugluftreifen 1 und einer den Fahrzeugluftreifen 1 aufnehmenden Felge 7 zusammen. Der Fahrzeugluftreifen 1 besteht seinerseits aus einer profilierten Lauffläche 2, deren Profil in der Darstellung in Figur 1 durch mehrere, nutartige Vertiefungen lediglich angedeutet ist. Unterhalb dieser Lauffläche 2 verfügt der Fahrzeugluftreifen 1 über mehrere Gürtellagen 15, die in der Figur 1 ebenfalls nur andeutungsweise dargestellt sind. Beidseitig der Lauffläche 2 geht der Fahrzeugluftreifen 1 ferner in je eine Seitenwand 3 beziehungsweise 4 über, deren unteres Ende jeweils durch einen Reifenwulst 5 beziehungsweise 6 gebildet ist. Jeder Reifenwulst 5, 6 besteht aus einem Wulstkern 19, der in ein Kernprofil 18 übergeht, das mit einem Gummiwerkstoff ummantelt ist. Die Reifenwulste 5, 6 des Fahrzeugluftreifens 1 bilden gegenüber der Umgebung eine Dichtung, so dass diese luftdicht an einem Felgenrand 14 der Felge 7 anliegen. Der Fahrzeugluftreifen 1 und die Felge 7 umgeben dadurch gemeinsam einen Lufthohlraum 21, der über das in einen Ventilschaft 13 eingesetzte Ventil 12 des Fahrzeugrades 8 mit Druckluft befüllt wird. Die Seitenwände 3, 4 des Fahrzeugluftreifens 1 setzen sich in an sich bekannter Weise aus mehreren Lagen zusammen und bilden dadurch ein komplexes System zur Stabilisierung des Fahrzeugluftreifens 1. So ist an der Innenseite einer jeden Seitenwand 3, 4 zunächst ein Verstärkungsprofil 16 vorhanden, an das sich in Richtung Außenseite jeder Seitenwand 3, 4 eine Karkasse 17 anschließt, die ihrerseits in eine in der Figur 1 nicht näher bezeichnete Gummischicht eingebettet ist. Zudem kann die Seitenwand zusätzliche Einzellagen enthalten, auf die hier aber nicht näher eingegangen wird.

Aus der Figur 1 geht die erfindungsgemäße Besonderheit hervor, die darin besteht, dass an der der Lauffläche 2 gegenüberliegenden Innenoberfläche 9 des Fahrzeugluftreifens 1 ein Absorber 10 angeordnet ist. Dieser Absorber 10 wird unter Verwendung eines Haftmittels 11 stoffschlüssig mit der Innenoberfläche 9 des Fahrzeugluftreifens 1 verbunden. Wie dies andeutungsweise aus der Darstellung in Figur 1 hervorgeht, weist das Haftmittel 11 vorliegend mehrere Unterbrechungen auf und ist bei dem Beispiel in Umfangsrichtung des Fahrzeugluftreifens 1 in Linienform auf die Innenoberfläche 9 des Fahrzeugluftreifens 1 aufgebracht worden, bevor der Absorber 10 mit einer korrespondierenden Haftmittelfläche auf die Innenoberfläche 9 aufgesetzt wurde. Bei diesem Beispiel ist es von Bedeutung, dass insbesondere in den seitlichen Randbereichen des Absorbers 10 jeweils ein Streifen Haftmittel 11 vorhanden ist, um insbesondere in diesen kritischen Bereichen ein selbsttätiges Ablösen des Absorbers 10 von der Innenoberfläche 9 des Fahrzeugluftreifens 1 zu verhindern.

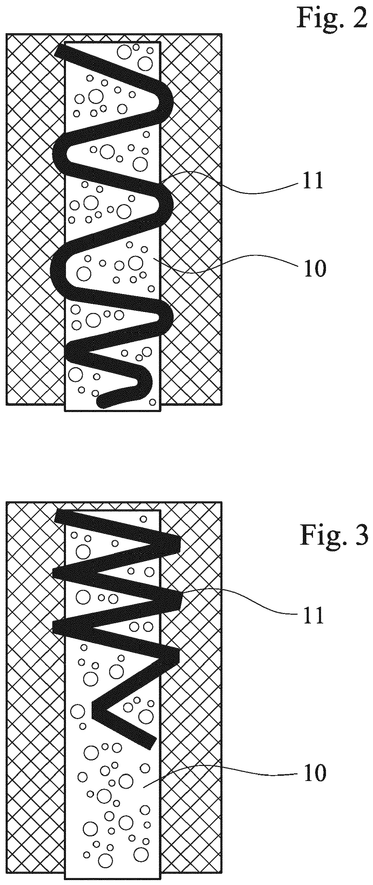

Aus den Figuren 2-18 gehen beispielhaft, jedoch nicht abschließend, unterschiedliche Möglichkeiten der Anordnung des Haftmittels 11 hervor, wobei die gezeigten Beispiele jeweils einen Haftmittelauftrag auf der Innenoberfläche 9 des Fahrzeugluftreifens 1 aufweisen und die Ansicht einen Schnittverlauf zwischen dem Haftmittel 11 und der Innenoberfläche 9 des Fahrzeugluftreifens 1 mit Blick auf die korrespondierende Haftmittelfläche des Absorbers 10 zeigt.

Die Figur 2 veranschaulicht zunächst eine Wellenlinienform des Haftmittels 11 in Richtung des Umfanges des Fahrzeugluftreifens 1, bei der die Wellenlinien des Haftmittels 11 teilweise eine annähernd sinusförmige Gestalt und teilweise eine von der Sinusform der Wellenlinie abweichenden Geometrie aufweisen.

Aus der Figur 3 geht eine zick-zack-förmige oder sägezahnartige Anordnung des Haftmittels 11 in Umfangsrichtung des Fahrzeugluftreifens 1 hervor. Auch hierbei sind Abschnitte mit gleichmäßigen Abständen der einzelnen Geometrien ebenso vorhanden, wie Abschnitte mit wechselnden Abständen der einzelnen Geometrien des Haftmittels 11.

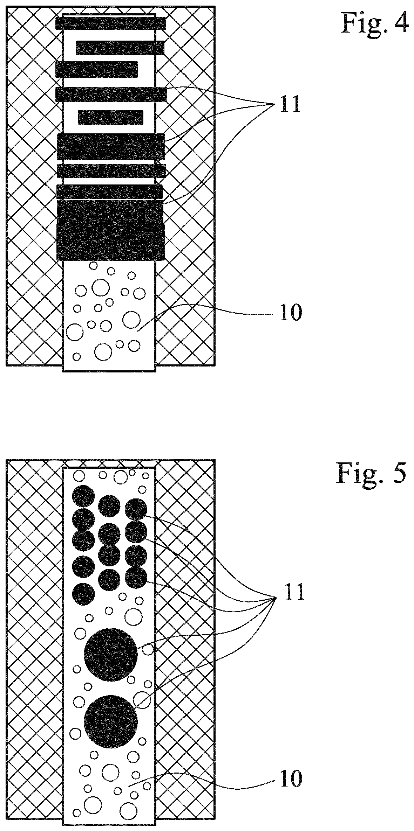

Ein besonderes Muster der Anordnung des Haftmittels 11 zeigt die Figur 4. Hierbei wurde der Haftmittel 11 streifenförmig aufgetragen, wobei durch die unterschiedliche Stärke und die unterschiedlichen Abstände der einzelnen Haftmittelstreifen 11 in Umfangsrichtung des Fahrzeugluftreifens 1 betrachtet eine barcodeähnliche Geometrie entsteht.

In der Figur 5 sind verschiedene Variationen einer Punktmatrix dargestellt, wobei sowohl eine Vielzahl kleinerer Punkte in wahlloser oder gleichmäßiger Anordnung vorgesehen werden können, als auch eine geringe Anzahl, in ihrer Geometrie vergrößerter Punkte des Haftmittels 11 in gleichmäßigen oder ungleichmäßigen Abständen. Ebenso kann mit einer derartigen Punktmatrix auch das Volumen des Haftmittelauftrages variiert werden.

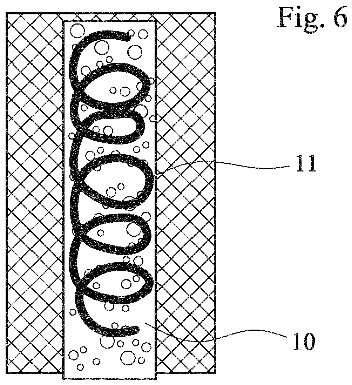

Die Figur 6 veranschaulicht eine Schlangenlinien- oder Spiralform des Haftmittels 11 entlang der Umfangsrichtung des Fahrzeugluftreifens 1.

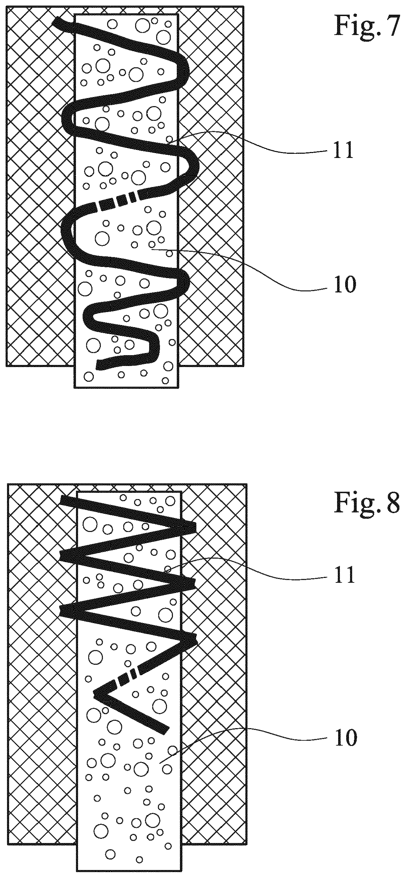

Die Figur 7 zeigt, in Umfangsrichtung des Fahrzeugluftreifens 1 betrachtet, wiederum eine Wellenlinienform des Haftmittels 11, wobei hier Unterbrechungen in der Linienführung des Haftmittels 11 vorhanden sind.

Analog hierzu ist aus der Darstellung in Figur 8 die zuvor bereits beschriebene zick-zack-förmige oder sägezahnartige Anordnung des Haftmittels 11 erkennbar, bei der ebenfalls teilweise Unterbrechungen in der Linienführung des Haftmittels 11 gegeben sind.

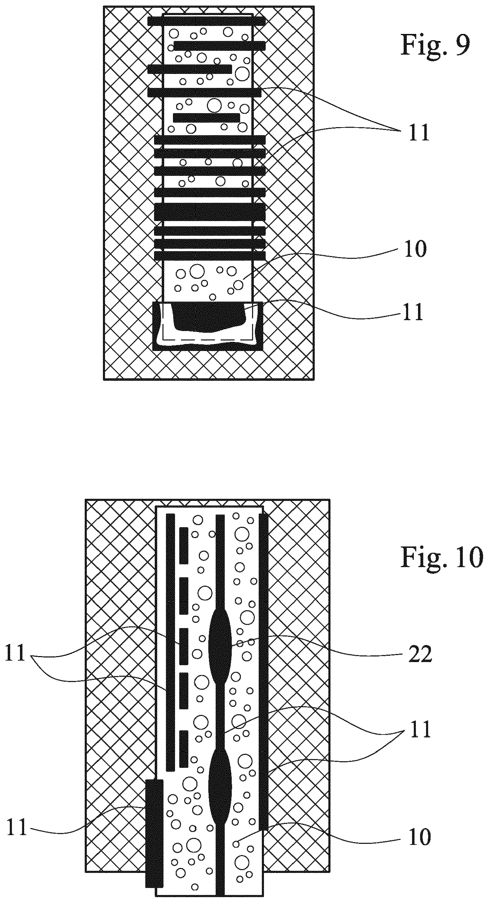

Die Figur 9 zeigt erneut ein Streifenmuster, dessen einzelne Streifen quer zur Umfangsrichtung des Fahrzeugluftreifens 1 ausgerichtet sind und teilweise seitlich über die Haftmittelfläche des Absorbers 10 hinausgehen. Darüber hinaus weist das barcodeähnliche Muster der Linienführung des Haftmittels 11 in Figur 9 unterschiedliche Abstände zwischen den Linien auf und zeigt teilweise einen seitlichen Versatz der Linien des Haftmittels 11 zueinander. Der untere Bildteil in Figur 9 veranschaulicht einen verbreiterten Bereich des Haftmittels 11, der im Bereich der Stoßkanten des Absorbers 10 vorgesehen ist, also an den Flächen des Absorbers 10, die nach seiner Einbringung in den Fahrzeugluftreifen 1 aneinander zur Anlage kommen.

Aus der Figur 10 sind verschiedene Möglichkeiten der Ausführung eines Streifenmusters in Umfangsrichtung des Fahrzeugluftreifens 1 entnehmbar. Diese können unterschiedliche, seitliche Abstände zueinander aufweisen, über Verdickungen 22 verfügen, ebenfalls über die Haftmittelfläche des Absorbers 10 hinausgehend appliziert sein und/oder Unterbrechungen aufweisen. Der im rechten Bildteil der Figur 10 erkennbarer Streifen des Haftmittels 11 geht seitlich über den Randbereich des Absorbers 10 hinaus und ist in diesem Abschnitt komplett durchgehend ausgeführt, was den wesentlichen Vorzug hat, dass dieser kritische, zum Ablösen neigende Randbereich des Absorbers 10 in besonderer Weise an der Innenoberfläche 9 des Fahrzeugluftreifens 1 fixiert wird.

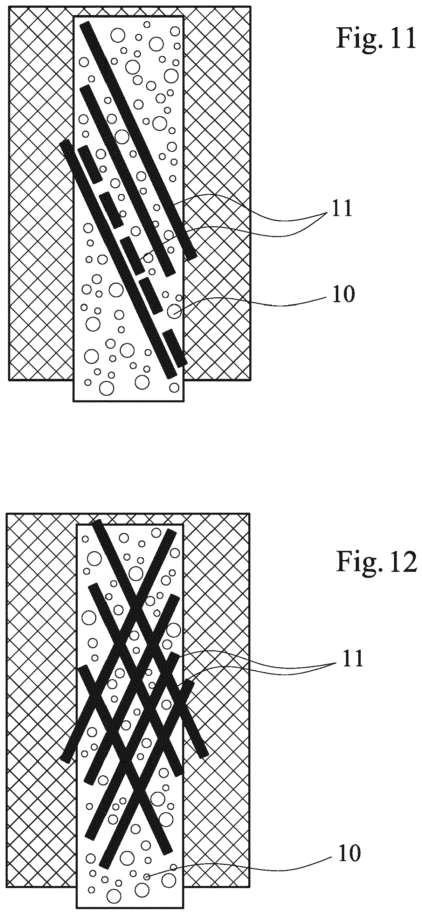

Ein weiteres Beispiel für die Linienführung des Haftmittels 11 geht aus der Figur 11 hervor. Hierbei wurden die Linien des Haftmittels 11 entlang der Innenoberfläche 9 des Fahrzeugluftreifens 1 schräg verlaufend, also unter einem Winkel zur Umfangsrichtung des Fahrzeugluftreifens 1, angeordnet. Auch aus dieser Darstellung geht hervor, dass die Abstände zwischen den Linien des Haftmittels 11 unterschiedlich breit sein können und darüber hinaus Unterbrechungen innerhalb der Linienführung möglich sind.

Figur 12 zeigt eine kreuzweise Anordnung der Linien des Haftmittels 11 mit teilweise wechselnden Abständen zueinander.

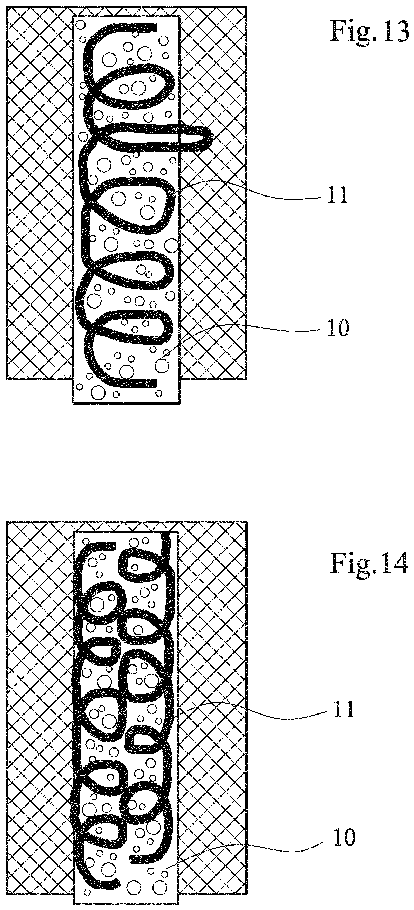

Die Figur 13 veranschaulicht noch einmal eine Schlangenlinienform des Haftmittels 11 entlang der Innenoberfläche 9 des Fahrzeugluftreifens 1. Dabei besteht die Besonderheit, dass die Linienführung keiner besonderen Geometrie folgt und darüber hinaus Teile der Linie des Haftmittels 11 über den Rand des Absorbers hinaus appliziert sind.

Wie aus der Figur 14 ersichtlich wird, können in Umfangsrichtung des Fahrzeugluftreifens 1 betrachtet, auch mehrere Schlangenlinienformen des Haftmittels 11 nebeneinander vorgesehen werden.

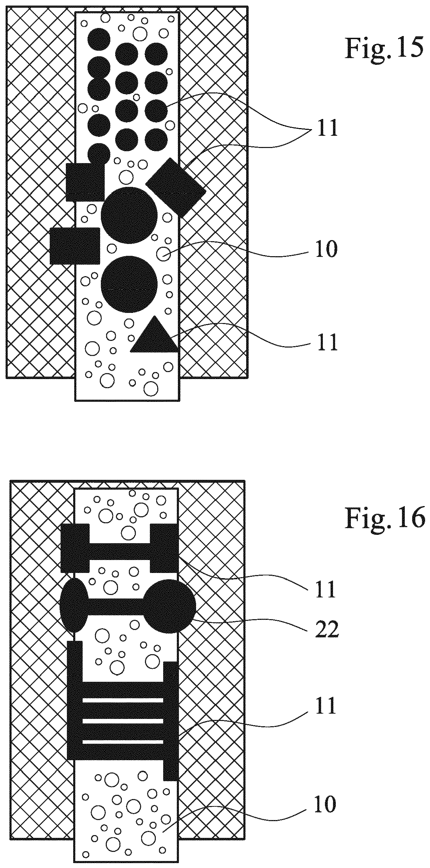

Beispielhaft ist aus der Figur 15 darüber hinaus eine Kombination aus einem Punktmuster mit karo- oder quaderförmigen Geometrien des Haftmittels 11 ersichtlich, wobei die einzelnen Muster des Haftmittels 11 auch separat zum Einsatz kommen können und nicht zwingend die veranschaulichte Kombination zur Anwendung kommen muss.

Die Figur 16 zeigt darüber hinaus eine Besonderheit, die darin besteht, dass in den Seitenbereichen des Absorbers 10 jeweils Verdickungen 22 vorgesehen sind, die eine verbesserte Haftung im Randbereich des Absorbers 10 mit dem Fahrzeugluftreifen 1 gewährleisten.

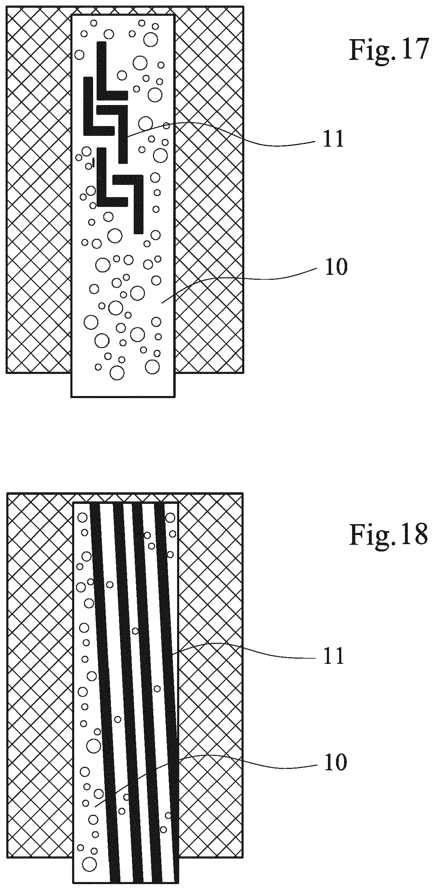

Im Rahmen der Erfindung liegt auch eine Ausführungsvariante der Linienführung des Haftmittels 11, wie sie aus der Figur 17 hervorgeht. Hier ist eine Art "griechisches Muster" der Linienführung des Haftmittels 11 auf die Innenoberfläche 9 des Fahrzeugluftreifens 1 aufgebracht worden.

Letztlich zeigt die Figur 18 noch einmal eine schräge Linienführung des Haftmittels 11, bei der durchgehende Linien zum Einsatz kommen, deren seitliche Abstände zueinander variieren.

Bei sämtlichen, der in den Figuren 1 bis 18 gezeigten Ausführungsvarianten der Haftmittelverteilung ist es ebenso möglich in der Geometrieführung des Haftmittels 11 jeweils auch Unterbrechungen der Linienführung vorzusehen oder die Stärke der Auftragung des Haftmittels 11 entlang der Richtung des Haftmittelauftrags zu verändern.

**Bezugszeichenliste:**

| | |
|---|---|
| 1 | Fahrzeugluftreifen |
| 2 | Lauffläche |
| 3 | Seitenwand |
| 4 | Seitenwand |
| 5 | Reifenwulst |
| 6 | Reifenwulst |
| 7 | Felge |
| 8 | Fahrzeugrad |
| 9 | Innenoberfläche |
| 10 | Absorber |
| 11 | Haftmittel |
| 12 | Ventil |
| 13 | Ventilschaft |
| 14 | Felgenrand |
| 15 | Gürtellagen |
| 16 | Verstärkungsprofil |
| 17 | Karkasse |
| 18 | Kernprofil |
| 19 | Wulstkern |
| 20 | freie Oberfläche (des Absorbers) |
| 21 | Lufthohlraum |
| 22 | Verdickung |

**Patentansprüche**

1. Fahrzeugluftreifen (1), dessen profilierte Lauffläche (2) beidseitig in Seitenwände (3, 4) übergeht, deren Ende durch einen Reifenwulst (5, 6) gebildet wird, der luftdicht in eine Felge (7) eines Fahrzeugrades (8) einsetzbar ist, wobei zur Schallabsorption ein stoffschlüssig mit der Innenoberfläche (9) des Fahrzeugluftreifens (1) verbundener Absorber (10) in den Fahrzeugluftreifen (1) integriert ist,
**dadurch gekennzeichnet, dass**
die stoffschlüssige Verbindung aus einem nicht vollflächig zwischen dem Absorber (10) und der Innenoberfläche (9) des Fahrzeugluftreifens (1) verteilt angeordneten Haftmittel (11) besteht, das eine sich entlang des Umfanges der Innenoberfläche (9) des Fahrzeugluftreifens (1) ungleichmäßige, sich ändernde Verteilung aufweist.

2. Fahrzeugluftreifen nach einem der vorstehend genannten Ansprüche,
**dadurch gekennzeichnet, dass**
das Haftmittel (11) aus einem Streifenmuster besteht, eine Wellenlinienform aufweist oder eine Punktmatrix bildet.

3. Fahrzeugluftreifen nach einem der vorstehend genannten Ansprüche,
**dadurch gekennzeichnet, dass**
das Volumen und/oder die Breite des Haftmittels (11) entlang des Umfangs der Innenoberfläche (9) und/oder in Richtung quer zum Umfang der Innenoberfläche (9) des Fahrzeugluftreifens (1) eine gleichmäßige oder sich ändernde Verteilung aufweist.

4. Fahrzeugluftreifen nach einem der vorstehend genannten Ansprüche,
**dadurch gekennzeichnet, dass**
die Gesamthaftmittelfläche zwischen Innenoberfläche (9) des Fahrzeugluftreifens (1) und Absorber (10) zwischen 10% und 90% der projezierten Fläche des Absorbers (10) beträgt.

5. Fahrzeugluftreifen nach einem der Ansprüche 1 bis 3,

**dadurch gekennzeichnet, dass**
die Gesamthaftmittelfläche zwischen Innenoberfläche (9) des Fahrzeugluftreifens (1) und Absorber (10) zwischen 30% und 70% der projezierten Fläche des Absorbers (10) beträgt.

6. Fahrzeugluftreifen nach einem der Ansprüche 1 bis 3,
**dadurch gekennzeichnet, dass**
die GesamtHaftmittelfläche zwischen Innenoberfläche (9) des Fahrzeugluftreifens (1) und Absorber (10) zwischen 40% und 50% der projezierten Fläche des Absorbers (10) beträgt.

7. Fahrzeugluftreifen nach einem der vorstehend genannten Ansprüche,
**dadurch gekennzeichnet, dass**
das Haftmittel (11) ein Klebstoff ist.

8. Fahrzeugluftreifen nach einem der vorstehend genannten Ansprüche,
**dadurch gekennzeichnet dass**
das Haftmittel (11) innerhalb der projezierten Fläche des Absorbers (10) und darüber hinaus appliziert ist.

9. Fahrzeugluftreifen nach einem der vorstehend genannten Ansprüche,
**dadurch gekennzeichnet dass**
das Haftmittel (11) ein Polyurethan-Gel ist.

10. Fahrzeugluftreifen nach einem der vorstehend genannten Ansprüche,
**dadurch gekennzeichnet dass**
das Verhältnis f(x) von Haftmittelfläche zu projezierter Fläche auf jeder Teilfläche X * Y folgender Funktion folgt:

$$f(x) = \frac{1}{2}\sum_{n=0}^{m}\left(a_n\,\frac{x^n}{U^n} + \frac{b_n}{2}(1 + \sin\frac{u_n x}{U}) + c_n e^{-v_n\frac{x}{U}}\right) \Big/ \sum_{n=0}^{m}(a_n + b_n + c_n) +$$

$$+ \frac{1}{2}\sum_{n=0}^{m}\left(g_n\,\frac{y^n}{B^n} + \frac{h_n}{2}(1 + \sin\frac{j_n Y}{B}) + i_n e^{-k_n\frac{Y}{B}}\right) \Big/ \sum_{n=0}^{m}(g_n + h_n + i_n)$$

und X und y Koordinaten in umfangs- beziehungsweise Querrichtung des Fahrzeugluftreifens (1) darstellen und folgendes gilt:

$$0 <= X <= U$$

$$0 <= Y <= B$$

$$0 <= x <= U$$

$$0 <= y <= B$$

$$Vn > \, \geq \, 0$$

und wobei "$a_n$", "$b_n$", "$c_n$" und "$u_n$" frei wählbare Parameter sind.

**Claims**

1. Vehicle pneumatic tyre (1), the profiled running surface (2) of which merges on both sides into sidewalls (3, 4), the end of which is formed by way of a tyre bead (5, 6) which can be inserted in an air-tight manner into a rim (7) of a vehicle wheel (8), an absorber (10) which is connected in an integrally joined manner to the inner surface (9) of the vehicle pneumatic tyre (1) being integrated into the vehicle pneumatic tyre (1) for the purpose of sound absorption, **characterized in that** the integrally joined connection consists of a bonding agent (11) which is arranged so as to be distributed (not over the full surface area) between the absorber (10) and the inner surface (9) of the vehicle pneumatic tyre (1), which bonding agent (11) has a varying distribution which is inhomogeneous along the circumference of the inner surface (9) of the vehicle pneumatic tyre (1).

2. Vehicle pneumatic tyre according to one of the preceding claims,
   **characterized in that**
   the bonding agent (11) consists of a stripe pattern, has an undulating line shape or forms a dot matrix.

3. Vehicle pneumatic tyre according to either of the preceding claims,
   **characterized in that**
   the volume and/or the width of the bonding agent (11) have/has a homogeneous or varying distribution along the circumference of the inner surface (9) and/or in the direction transversely with respect to the circumference of the inner surface (9) of the vehicle pneumatic tyre (1) .

4. Vehicle pneumatic tyre according to one of the preceding claims,
   **characterized in that**
   the overall bonding agent surface area between the inner surface (9) of the vehicle pneumatic tyre (1) and the absorber (10) is between 10% and 90% of the projected surface area of the absorber (10).

5. Vehicle pneumatic tyre according to one of Claims 1 to 3,
   **characterized in that**
   the overall bonding agent surface area between the inner surface (9) of the vehicle pneumatic tyre (1) and the absorber (10) is between 30% and 70% of the projected surface area of the absorber (10).

6. Vehicle pneumatic tyre according to one of Claims 1 to 3,
   **characterized in that**
   the overall bonding agent surface area between the inner surface (9) of the vehicle pneumatic tyre (1) and the absorber (10) is between 40% and 50% of the projected surface area of the absorber (10).

7. Vehicle pneumatic tyre according to one of the preceding claims,
   **characterized in that**
   the bonding agent (11) is an adhesive.

8. Vehicle pneumatic tyre according to one of the preceding claims,
   **characterized in that**
   the bonding agent (11) is applied within the projected surface area of the absorber (10) and beyond this.

9. Vehicle pneumatic tyre according to one of the preceding claims,
   **characterized in that**
   the bonding agent (11) is a polyurethane gel.

10. Vehicle pneumatic tyre according to one of the preceding claims,
    **characterized in that**
    the ratio f(x) of the bonding agent surface area to the projected surface area has the following function on each part surface area X*Y:

$$f(x) = \frac{1}{2} \sum_{n=0}^{m} \left( a_n \frac{x^n}{U^n} + \frac{b_n}{2} (1 + \sin\frac{u_n x}{U}) + c_n e^{-v_n \frac{x}{U}} \right) \Big/ \sum_{n=0}^{m} (a_n + b_n + c_n) +$$

$$+ \frac{1}{2} \sum_{n=0}^{m} \left( g_n \frac{y^n}{B^n} + \frac{h_n}{2} (1 + \sin\frac{j_n y}{B}) + i_n e^{-k_n \frac{y}{B}} \right) \Big/ \sum_{n=0}^{m} (g_n + h_n + i_n)$$

and X and y represent coordinates in the circumferential and transverse direction of the vehicle pneumatic tyre (1), and the following applies:

$$0 \le X \le U$$

$$0 \le Y \le B$$

$$0 \le x \le U$$

$$0 \le y \le B$$

$$V_n > 0,$$

and wherein "$a_n$", "$b_n$", "$c_n$" and "$u_n$" are freely selectable parameters.

**Revendications**

1. Pneumatique de véhicule (1) dont la bande de roulement profilée (2) se transforme des deux côtés en des parois latérales (3, 4) dont l'extrémité est formée par un talon de pneumatique (5, 6) qui peut être inséré de manière étanche à l'air dans une jante (7) d'une roue de véhicule (8), un absorbeur (10) relié par une liaison de matière à la surface intérieure (9) du pneumatique de véhicule (1) étant intégré dans le pneumatique de véhicule (1) pour réaliser une absorption acoustique,
**caractérisé en ce que**
la liaison de matière comprend un activateur d'adhérence (11) qui est disposé sans être totalement réparti entre l'absorbeur (10) et la surface intérieure (9) du pneumatique pour véhicule (1) et qui présente une distribution variable non uniforme sur l'étendue de la surface intérieure (9) du pneumatique de véhicule (1) .

2. Pneumatique de véhicule selon l'une des revendications précédentes,
**caractérisé en ce que**
l'activateur d'adhérence (11) comprend un motif à rayures, a une forme de lignes ondulées ou forme une matrice de points.

3. Pneumatique de véhicule selon l'une des revendications précédentes,
**caractérisé en ce que**
le volume et/ou la largeur de l'activateur d'adhérence (11) présente une distribution uniforme ou variable sur l'étendue de la surface intérieure (9) et/ou dans la direction transversale à l'étendue de la surface intérieure (9) du pneumatique de véhicule (1).

4. Pneumatique de véhicule selon l'une des revendications précédentes,
**caractérisé en ce que**
toute la surface adhésive située entre la surface intérieure (9) du pneumatique de véhicule (1) et l'absorbeur (10) est comprise entre 10 % et 90 % de la surface projetée de l'absorbeur (10).

**5.** Pneumatique de véhicule selon l'une des revendications 1 à 3,
**caractérisé en ce que**
toute la surface adhésive située entre la surface intérieure (9) du pneumatique de véhicule (1) et l'absorbeur (10) est comprise entre 30 % et 70 % de la surface projetée de l'absorbeur (10).

**6.** Pneumatique de véhicule selon l'une des revendications 1 à 3,
**caractérisé en ce que**
toute la surface adhésive située entre la surface intérieure (9) du pneumatique de véhicule (1) et l'absorbeur (10) est comprise entre 40 % et 50 % de la surface projetée de l'absorbeur (10).

**7.** Pneumatique de véhicule selon l'une des revendications précédentes,
**caractérisé en ce que**
l'activateur d'adhérence (11) est un adhésif.

**8.** Pneumatique de véhicule selon l'une des revendications précédentes,
**caractérisé en ce que**
l'activateur d'adhérence (11) est appliqué à l'intérieur de la surface projetée de l'absorbeur (10) et au-delà.

**9.** Pneumatique de véhicule selon l'une des revendications précédentes,
**caractérisé en ce que**
l'activateur d'adhérence (11) est un gel de polyuréthane.

**10.** Pneumatique de véhicule selon l'une des revendications précédentes,
**caractérisé en ce que**
le rapport f(x) de la surface d'activateur d'adhérence à la surface projetée sur chaque surface partielle X*Y a la fonction suivante :

$$f(x) = \frac{1}{2}\sum_{n=0}^{m}\left(a_n\frac{x^n}{U^n} + \frac{b_n}{2}\left(1 + sin\frac{u_n x}{U}\right) + c_n e^{-v_n\frac{x}{U}}\right) / \sum_{n=D}^{m}(a_n + b_n + c_n) +$$
$$\frac{1}{2}\sum_{n=0}^{m}\left(g_n\frac{y^n}{B^n} + \frac{h_n}{2}\left(1 + sin\frac{j_n y}{B}\right) + i_n e^{-k_n\frac{y}{B}}\right) / \sum_{n=D}^{m}(g_n + h_n + i_n)$$

et X et Y représentent des coordonnées dans la direction circonférentielle ou transversale du pneumatique de véhicule (1), et ce qui suit s'applique :

$$0 \leq X \leq U$$

$$0 \leq Y \leq B$$

$$0 \leq x \leq U$$

$$0 \leq y \leq B$$

$$V_n > 0$$

et "$a_n$", "$b_n$", "$c_n$" et "$u_n$" étant des paramètres arbitraires.

Fig. 1

Fig. 2

11

10

Fig. 3

11

10

Fig. 4

Fig. 5

Fig. 6

— 11

— 10

Fig. 7

11

10

Fig. 8

11

10

Fig. 9

11

10

11

Fig. 10

11

22

11

11

10

Fig. 11

11

10

Fig. 12

11

10

Fig. 13

Fig. 14

Fig. 15

11

10

11

Fig. 16

11

22

11

10

Fig.17

11

10

Fig.18

11

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007028932 A1
- DE 19806953 C2
- DE 102011053686 A1
- JP 2005104314 A